# EUROPEAN PATENT APPLICATION

(11) **EP 4 016 331 A1**
(43) Date of publication of application: **22.06.2022**
(21) Application number: 21195511.7
(22) Date of filing: 08.09.2021
(51) Int. Cl.: G06F 16/901, G06N 3/08, G06N 3/063, G06N 3/04

(54) **NEURAL NETWORK DENSE LAYER SPARSIFICATION AND MATRIX COMPRESSION**

(30) Priority: 21.12.2020 US 202017129590
(71) Applicant: Intel Corporation, Santa Clara, CA 95054 (US)
(72) Inventor: Gobriel, Sameh, Dublin, 94568 (US); Tithi, Jesmin Jahan, San Jose, 95121 (US); Tai, Tsung-Yuan, Portland, 97229 (US); Jain, Nilesh, Portland, 97229 (US)
(74) Representative: Goddar, Heinz J.

(57) **Abstract**

Neural network dense layer sparsification and matrix compression is disclosed. An example of an apparatus includes one or more processors; a memory to store data for processing, including data for processing of a deep neural network (DNN) including one or more layers, each layer including a plurality of neurons, the one or more processors to perform one or both of sparsification of one or more layers of the DNN, including selecting a subset of the plurality of neurons of a first layer of the DNN for activation based at least in part on locality sensitive hashing of inputs to the first layer; or compression of a weight or activation matrix of one or more layers of the DNN, including detection of sparsity patterns in a matrix of the first layer of the DNN based at least in part on locality sensitive hashing of patterns in the matrix.

## Description

### FIELD

This disclosure relates generally to machine learning and more particularly to neural network dense layer sparsification and weight and/or activation matrix compression.

### BACKGROUND OF THE DISCLOSURE

Neural networks have proven to be extremely useful tools in address complex problems. Neural networks operate using artificial neurons arranged into one or more layers that process data from an input layer to an output layer, applying weighting values to the data during the processing of the data. Such weighting values are determined during a training process and applied during an inference process.

However, deep neural networks (DNNs) have grown in size and complexity, and as a result have greatly increased compute requirements. The neural network models are very compute and memory intensive as they contain millions to billions of parameters to update. Further, certain layers in these models require very large matrices multiplication operations to update those model parameters, which takes a large portion of the compute cycles, and thus makes these challenging candidates to run on a computing platform.

### BRIEF DESCRIPTION OF THE DRAWINGS

So that the manner in which the above recited features of the present embodiments can be understood in detail, a more particular description of the embodiments, briefly summarized above, may be had by reference to embodiments, some of which are illustrated in the appended drawings. It is to be noted, however, that the appended drawings illustrate typical embodiments and are therefore not to be considered limiting of its scope. The figures are not to scale. In general, the same reference numbers will be used throughout the drawing(s) and accompanying written description to refer to the same or like parts.
**FIG. 1** is an illustration of a simplified system for dense layer sparsification and compression according to some embodiments;
**FIG. 2A** is an illustration of a neural network for processing, according to some embodiments;
**FIGS. 2B** **and** **2C** illustrate an example of a neural network that may be processed utilizing dense layer sparsification and compression according to some embodiments;
**FIG. 3** is an illustration of Locality Sensitive Hashing for application in dense layer sparsification and compression, according to some embodiments;
**FIG. 4** is an illustration of random projection as one example of Locality Sensitive Hashing functions for use in neural network dense layer sparsification and matrix compression, according to some embodiments;
**FIG. 5** is an illustration of application of Locality Sensitive Hashing to dynamically sample active neurons, according to some embodiments;
**FIG. 6** is an illustration of application of Locality Sensitive Hashing for weight compression or sharing in a neural network, according to some embodiments;
**FIGS. 7A** **and** **7B** illustrate Locality Sensitive Hashing compression, according to some embodiments;
**FIG. 8** is an illustration of memory loading of compressed weights, according to some embodiments;
**FIG. 9A** is a flowchart to illustrate dense layer sparsification using Locality Sensitive Hashing, according to some embodiments;
**FIG. 9B** is a flowchart to illustrate compression of weight and activation matrices of models using Locality Sensitive Hashing, according to some embodiments; and
**FIG. 10** is a schematic diagram of an illustrative electronic computing device to enable dense layer sparsification and compression according to some embodiments.

### DETAILED DESCRIPTION

Implementations of the disclosure describe neural network dense layer sparsification and weight and/or activation matrix compression.

In some embodiments, an apparatus, system, or process utilizes Locality Sensitive Hashing (LSH) to detect similarity across inputs/activations during compute-intensive dense layers in deep neural networks (DNNs), and, based on this information, activate a only a smaller subset of neurons, which can provide for greatly reduced processing times. For the inference phase, Locality Sensitive Hashing can detect similarity across different sparse weight patterns. Similar-enough patterns (i.e., patterns that have sufficient similarity) may then be compressed together to minimize the memory bandwidth requirement without sacrificing model accuracy.

Deep neural networks, referring generally to neural networks including multiple hidden layers, have a powerful capacity for feature extraction, learning, and representation. Deep neural networks use a cascade of multiple layers of nonlinear processing for feature extraction, transformation, and learning and is used for supervised learning (e.g., classification) and/or unsupervised learning (e.g., pattern analysis).

However, deep neural networks are becoming larger and more complex, with recent examples requiring an average of ten times larger compute requirements per year. As a result, it is becoming increasingly challenging for systems to cope with the very high dimensionality of their inputs represented using complex features that the systems are trying to learn. For example, Deep Learning for Language models (e.g., using Transformer models) are used in many Natural Language Processing (NLP) tasks, including machine translation, text summarization, speech recognition, questionanswering systems, and many others. These models are usually very compute and memory intensive as they contain millions to billions of parameters to update. Certain layers in these models (e.g., embedding layer, attention layers, fully connected layers, etc.) require very large matrix multiplication operations to update those model parameters, which takes a very large portion of the compute cycles. In such processing, the loading of huge weights for computation is where most of the CPU cycles are spent.

In some embodiments, Locality Sensitive Hashing (LSH) is a mechanism that may be applied to significantly reduce such computation. LSH is an algorithmic technique that is applied to hash similar input items into the same clustering buckets with high probability, as further described below. In some embodiments, for each input/activation in a neural network layer, LSH is applied per input to dynamically detect similarity of this input with previous inputs in history, and based on similarity information a system is to activate only a small portion (for example, 5%) of neurons, with the neurons selected being those with high activation for the similar inputs in history. This can reduce the required computations by orders of magnitude.

In some embodiments, LSH is applied to sparsify (i.e., cause to become more sparse) the dense layers for Natural Language Processing (NLP) and Deep Learning models, both in the forward pass and backward propagation, to reduce the computation overhead of these layers (and consequently for the whole model) and improve the overall training throughput. In some embodiments, a novel technology is provided to compress the model weight and activation matrix, and to compute on that compressed data using LSH both in training and inference phases.

LSH may be utilized to exploit inherent redundancy in neural networks, and achieve drastic reductions in the number of neurons (hence the model size) for training. Further, for inference, LSH may be further applied to dramatically compress the weight and activation matrices. The compression technique may be referred to herein as Locality Sensitive Hashing compression, or "LSH-compress". LSH-compress is a lossy compression technique that uses a low-cost hash function to group similar-enough weight vectors into hash buckets, wherein all connections within a same hash bucket may share a single parameter value, the value being an average of all values in the same bucket. This technology may be applied to achieve much smaller models with greatly reduced computation overhead, while retaining accuracy that is close to the original uncompressed model.

Further, because the active subset of neurons is very small compared to the total number of neurons, and changes dynamically per input, there is very little overlap of these subsets across inputs. As a result, it is relatively simple to perform parallel training of models across cores without any synchronization, e.g., Asynchronous Gradient Descent (ASGD)-style of training that can scale almost linearly with the core count.

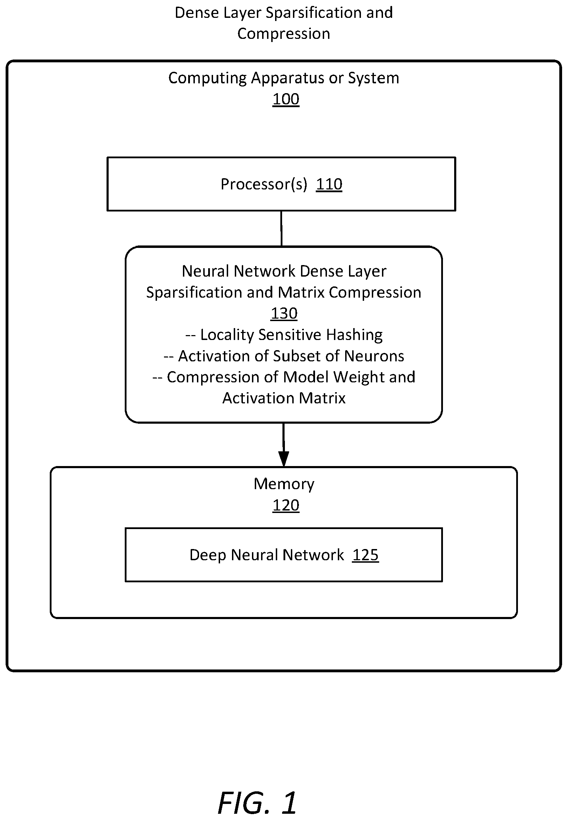

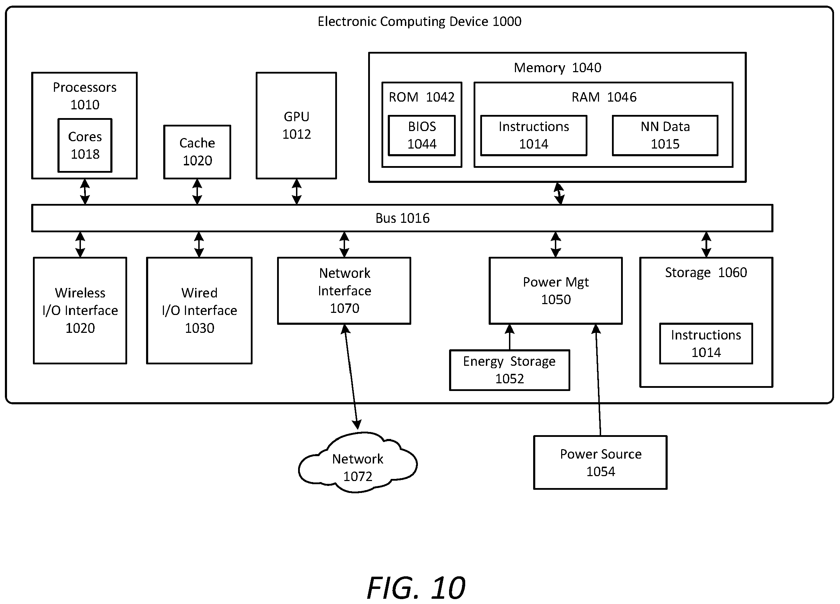

**FIG.** 1 is an illustration of a simplified system for dense layer sparsification and compression according to some embodiments. In this illustration, a computing apparatus or system (components of which are illustrated in more detail in FIG. 10) to provide dense layer sparsification and compression includes at least one or more processors 110, which may include any of, for example, central processing units (CPU), graphical processing units (GPUs), embedded processors, or other processors, to provides processing for operations including machine learning with neural network processing. The computing apparatus or system 100 further includes a memory to store data for a deep neural network 125.

In some embodiments, the computing apparatus or system 100 provides for neural network dense layer sparsification and matrix compression 130 to enable greatly improved performance in processing. As further described herein, the apparatus or system is to utilize Locality Sensitive Hashing (LSH) to detect similarity across inputs compute-intensive dense layers in deep neural networks (DNNs), and, based on this information, activate a only a smaller subset of neurons. In some embodiments, the computing apparatus or system 100 is further to provide for compression of a model weight and activation matrix utilizing Locality Sensitive Hashing.

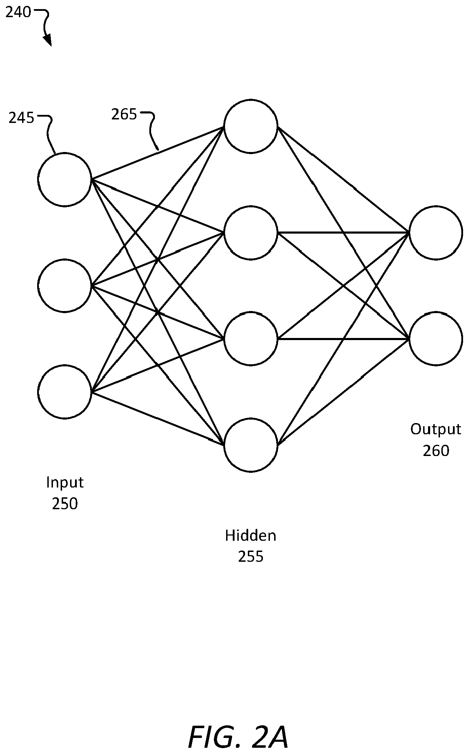

**FIG. 2A** is an illustration of a neural network that may be processed according to some embodiments. As illustrated in FIG. 2A, a neural network 240, such as deep neural network 125 in FIG. 1, includes a collection of connected units or nodes 245, also referred to as artificial neurons. Typically, nodes are arranged in multiple layers. Different layers may perform different transformations on their inputs. In this simplified illustration the neural network includes the nodes in layers that include an input layer 250, one or more hidden layers 255, and an output layer 260. Each connection (or edge) 165 can transmit a signal to other nodes 245. A node 245 that receives a signal may then process it and signal nodes connected to it. The nodes and edges typically have a weight that adjusts as learning proceeds.

Neural networks, including feedforward networks, CNNs (Convolutional Neural Networks, and RNNs (Recurrent Neural Networks) networks, may be used to perform deep learning. Deep learning refers to machine learning using deep neural networks. The deep neural networks used in deep learning are artificial neural networks composed of multiple hidden layers, as opposed to shallow neural networks that include only a single hidden layer. Deeper neural networks are generally more computationally intensive to train. However, the additional hidden layers of the network enable multistep pattern recognition that results in reduced output error relative to shallow machine learning techniques.

Deep neural networks used in deep learning typically include a front-end network to perform feature recognition coupled to a back-end network which represents a mathematical model that can perform operations (e.g., object classification, speech recognition, etc.) based on the feature representation provided to the model. Deep learning enables machine learning to be performed without requiring hand crafted feature engineering to be performed for the model. Instead, deep neural networks can learn features based on statistical structure or correlation within the input data. The learned features can be provided to a mathematical model that can map detected features to an output. The mathematical model used by the network is generally specialized for the specific task to be performed, and different models will be used to perform different task.

Once the neural network is structured, a learning model can be applied to the network to train the network to perform specific tasks. The learning model describes how to adjust the weights within the model to reduce the output error of the network. Backpropagation of errors is a common method used to train neural networks. An input vector is presented to the network for processing. The output of the network is compared to the desired output using a loss function and an error value is calculated for each of the neurons in the output layer. The error values are then propagated backwards until each neuron has an associated error value which roughly represents its contribution to the original output. The network can then learn from those errors using an algorithm, such as the stochastic gradient descent algorithm, to update the weights of the of the neural network.

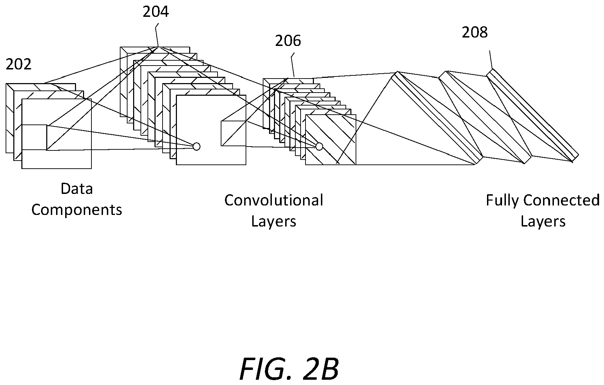

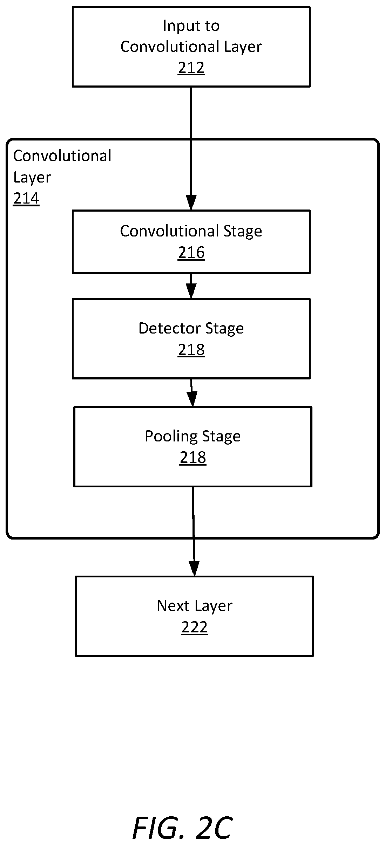

**FIGS. 2B** **and** **2C** illustrate an example of a neural network that may be processed utilizing dense layer sparsification and compression according to some embodiments. FIG. 2B illustrates various layers within a CNN as a specific neural network example. However, embodiments are not limited to a particular type of neural network. As shown in FIG. 2B, an exemplary neural network used to, for example, model image processing can receive input 202 describing the red, green, and blue (RGB) components of an input image (or any other relevant data for processing). The input 202 can be processed in this example by multiple convolutional layers (e.g., convolutional layer 204 and convolutional layer 206). The output from the multiple convolutional layers may optionally be processed by a set of fully connected layers 208. Neurons in a fully connected layer have full connections to all activations in the previous layer, as previously described for a feedforward network. The output from the fully connected layers 208 can be used to generate an output result from the network. The activations within the fully connected layers 208 can be computed using matrix multiplication instead of convolution. Not all CNN implementations make use of fully connected layers 208. For example, in some implementations the convolutional layer 206 can generate output for the CNN

The convolutional layers are sparsely connected, which differs from traditional neural network configuration found in the fully connected layers 208. Traditional neural network layers are fully connected, such that every output unit interacts with every input unit. However, the convolutional layers are sparsely connected because the output of the convolution of a field is input (instead of the respective state value of each of the nodes in the field) to the nodes of the subsequent layer, as illustrated. The kernels associated with the convolutional layers perform convolution operations, the output of which is sent to the next layer. The dimensionality reduction performed within the convolutional layers is one aspect that enables the CNN to scale to process large images.

FIG. 2C illustrates exemplary computation stages within a convolutional layer of a CNN. Input to a convolutional layer 212 of a CNN can be processed in three stages of a convolutional layer 214. The three stages can include a convolution stage 216, a detector stage 218, and a pooling stage 220. The convolution layer 214 can then output data to a successive convolutional layer 222. The final convolutional layer of the network can generate output feature map data or provide input to a fully connected layer, for example, to generate a classification value for the input to the CNN

In the convolution stage 216 several convolutions may be performed in parallel to produce a set of linear activations. The convolution stage 216 can include an affine transformation, which is any transformation that can be specified as a linear transformation plus a translation. Affine transformations include rotations, translations, scaling, and combinations of these transformations. The convolution stage computes the output of functions (e.g., neurons) that are connected to specific regions in the input, which can be determined as the local region associated with the neuron. The neurons compute a dot product between the weights of the neurons and the region in the local input to which the neurons are connected. The output from the convolution stage 216 defines a set of linear activations that are processed by successive stages of the convolutional layer 214.

The linear activations can be processed by a detector stage 218. In the detector stage 218, each linear activation is processed by a non-linear activation function. The non-linear activation function increases the nonlinear properties of the overall network without affecting the receptive fields of the convolution layer. Several types of non-linear activation functions may be used. One particular type is the rectified linear unit (ReLU), which uses an activation function defined such that the activation is thresholded at zero.

The pooling stage 220 uses a pooling function that replaces the output of the convolutional layer 206 with a summary statistic of the nearby outputs. The pooling function can be used to introduce translation invariance into the neural network, such that small translations to the input do not change the pooled outputs. Invariance to local translation can be useful in scenarios where the presence of a feature in the input data is more important than the precise location of the feature. Various types of pooling functions can be used during the pooling stage 220, including max pooling, average pooling, and 12-norm pooling. Additionally, some CNN implementations do not include a pooling stage. Instead, such implementations substitute and additional convolution stage having an increased stride relative to previous convolution stages.

The output from the convolutional layer 214 can then be processed by the next layer 222. The next layer 222 can be an additional convolutional layer or one of the fully connected layers 208. For example, the first convolutional layer 204 of FIG. 2B can output to the second convolutional layer 206, while the second convolutional layer can output to a first layer of the fully connected layers 208.

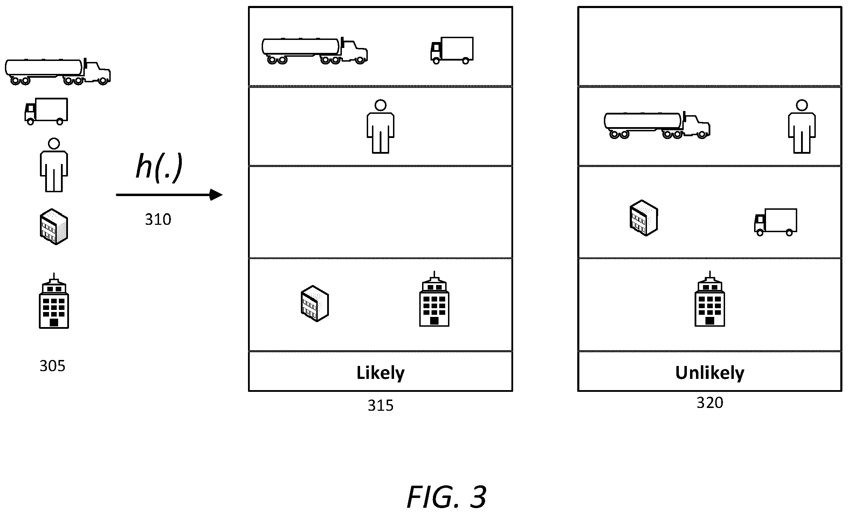

**FIG. 3** is an illustration of Locality Sensitive Hashing for application in dense layer sparsification and compression, according to some embodiments. As illustrated, locality sensitive hashing may be applied in a K-Nearest Neighbor (KNN) problem. Locality Sensitive Hashing is a hashing mechanism that hashes similar (but not necessarily identical) inputs to the same bucket with high probability. This operation reduces the dimensionality of high-dimensional input by categorizing the large set of inputs to a smaller set of buckets. LSH differs from conventional and cryptographic hash functions because LSH is intended to maximize the probability of a "collision" for similar items instead of reducing collisions.

LSH has been commonly used in solving the approximate or exact Near Neighbor Search problem in high dimensional spaces. As shown in the example in FIG. 3, high dimensional images 305 are hashed, shown as the hash function h(.) 310, into multiple clustering buckets. LSH hash functions will ideally cluster "similar-enough" images into the same buckets (i.e., it is more likely that two truck images hash into the same bucket rather than a building and truck images hash together). As shown, the likely hashing results 315 illustrate clustering of similar images into buckets, while the unlikely hashing results 320 are provided to contrast clustering of dissimilar images.

Subsequently, given a query image with the task to answer the question of which image is its nearest neighbor, the same hash function h(.) is used to hash the query image into a certain bucket, which is then used to answer the query. LSH thus reduces the search space to only the candidates in this bucket instead of searching the whole database of images.

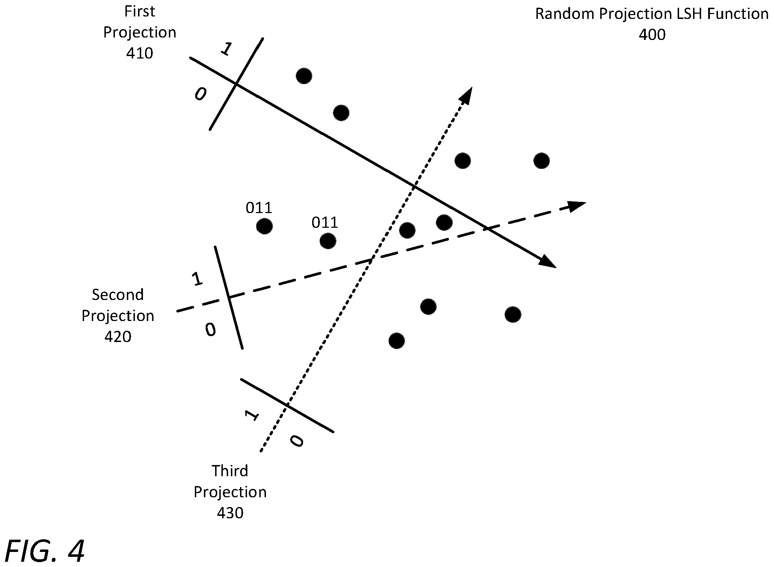

**FIG. 4** is an illustration of random projection as one example of Locality Sensitive Hashing functions for use in neural network dense layer sparsification and matrix compression, according to some embodiments. It is noted that many different hashing functions (e.g., random projection, minwise hashing, bitsampling hashing, etc.) have been proposed to implement LSH and may be implemented in an embodiment. Each such function may work best for certain inputs and for certain similarity measures (e.g. cosine similarity, hamming similarity, etc.).

An example of a simple LSH function using random projection 400, is shown in FIG. 4, where data points in D dimensions are projected on a random plane. In this illustration, a first projection 410, second projection 420, and third projection 430 are provided. However, any number and direction of projections may be applied in a particular operation. In this example each projection will result in one bit for each data point, with the bit having a value of ' 1' if the data point is above the plane of the projection and '0' if the data point is below the plane of the projection.

Thus, for K projections (with K equaling three in FIG. 4) a signature of K-bits is produced. Data points will fall into the same bucket if they have the same K-bit signature. For example, two data points with a signature of '011' are illustrated, with the signature indicating that the data points are below the plane for the first projection 410, and above the planes for the second projection 420 and third projection 430.

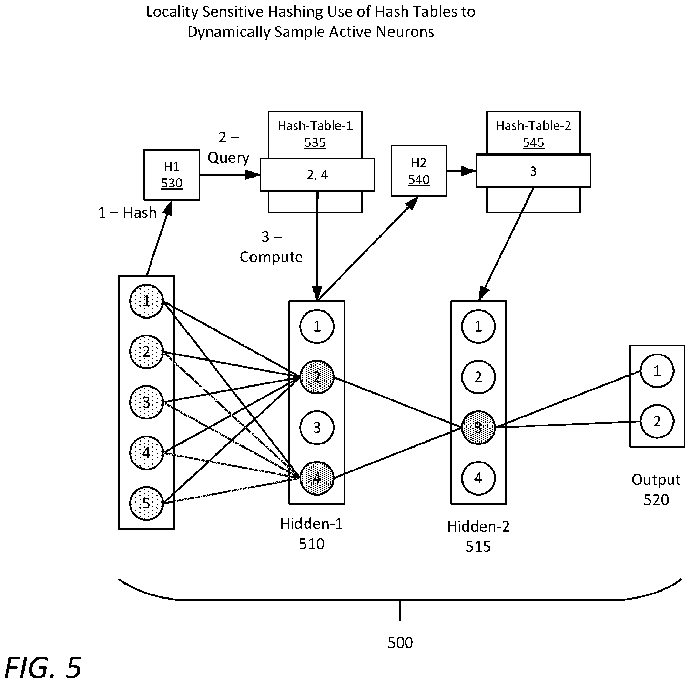

In some embodiments, one or more Locality Sensitive Hashing functions may be applied in neural network dense layer sparsification and matrix compression, as further illustrated in FIGS. 5-9B.

**FIG. 5** is an illustration of application of Locality Sensitive Hashing to dynamically sample active neurons, according to some embodiments. In some embodiments, Locality Sensitive Hashing is applied to optimize the computation of DNNs. As illustrated in FIG. 5, a deep neural network 500 may include, but is not limited to, an input layer 505 and two hidden layers (Hidden-1 510 and Hidden-2 515) to generate an output 520.

In some embodiments, LSH hash functions and hash tables are utilized at one or more layers of a neural network, such as at each of layers 505-515 of the deep neural network 500 provided in FIG. 5. In this example, for each layer given an input_X, LSH functions are used to map this input_X to a hash table bucket. As illustrated in FIG. 5, this includes a first hash function (H1) 530 from Input-1 for mapping to Hash-Table-1 535 and directed to Hidden-1 510, and a second hash function (H2) 540 from Hidden-1 510 for mapping to Hash-Table-2 545 and directed to Hidden-2 515.

It is noted that for ease of illustration FIG. 5 provides one hash table per layer, with Hash-Table-1 535 being associated with Hidden-1 510 and Hash-Table-2 535 being associated with Hidden-1 510. However, an embodiment may include multiple hash tables for each layer of the relevant neural network. Thus, in FIG. 5, Hash-Table-1 535 may represent a first set of multiple hash tables associated with Hidden-1 510 and Hash-Table-2 545 may represent a second set of multiple hash tables associated with Hidden-2 515, with hash functions H1 530 and H2 540 representing sets of hash functions, with a hash function being associated with each of the multiple hash tables.

For example, a set of hash tables (T1, T2, ... Tx) can be utilized per layer, with each hash table having an associated hash function (H1, H2, ... Hx). In such implementation, the subset of neurons activated for a particular layer is selected from the union of the subsets that are returned by each hash table that is associated with the layer. The use of such multiple hash tables per layer may be implemented in order to increase accuracy of the operation in selection of the neurons to be activated in each layer.

It is further noted that at any given Layer L, the input to the hashing comes from the prior layer, Layer L―1. The appropriate hashing bucket will contain similar-enough inputs that have been encountered before. The one or more hash tables store the information for each input in terms of what is the K% subset of neurons (where K can potentially be as small as 5%) that are of the highest activation values. Then for the new input_X, the same K neurons for this layer are activated and the rests are deactivated resulting in a significantly smaller portion of computation needed per layer and yet achieving the same or similar accuracy as an operation with activation of all of the neurons of the relevant layer.

In FIG. 5, given an Input_1, using LSH, the operation determines that Input_1 is similar-enough to another Input_n in the network processed in the past. For Input_n, the subset of neurons that are related is a subset (e.g. nodes 2, 4 in the first layer) of the full set of neurons. Then for Input_1, only these neurons are lit up (activated) and used in this layer and the rest of the neurons of the layer are turned off (deactivated). This is illustrated as 1-Hash from Input-1 505, and 2-Query from Hash-Table-1 535, finding the subset of nodes 2 and 4. This follows with 3-Compute activating only nodes 2 and 4 in Hidden-1 510. This may be repeated for further layers and the subset of neurons to activate in the subsequent layer is determined. For example, only node 3 is activated in Hidden-2. As a result, much less computation is required in comparison with the original network, while providing a same or similar accuracy of a full network, both for an inference phase and a learning phase. It is noted that embodiments are not limited to implementations in which each layer is subject to activation reduction, as illustrated in FIG. 5, and may further include implementations in which only certain selected layers are subject to activation rejection, as needed for the particular operation.

In a particular example of a natural language program, the dense matrix multiplication operations may consume a large percentage (e.g., nearly 80%) of the cycles for running the NLP model. These dense matrix multiplications are usually used in the different embedding and attention layers in the NLP model, and hence it is possible to apply LSH to sparsify these layers. By sampling the active set of neurons in a sensible way (based on similarity) in an embodiment the computation for these layers may be reduced drastically without significant negative impact on accuracy.

**Weight Compression and Weight Sharing** - Many deep learning models employ as their nonlinear operator the ReLU (rectified linear unit) function, which clamps all negative activation values to zero. The activation values are the output values of an individual layer that are passed as inputs to the next layer. As a result, model weights and activations generally become very sparse (with many weights and activations as zeros) as processing proceeds to deeper layers in the model.

Compression techniques can be classified into two broad categories: Lossless compression (compression that does not induce any loss in accuracy), and Lossy (compression that might sacrifice accuracy). Operations commonly attempt to make use of the benefits of the very sparse weight matrices of different models because multiplication by zero results in zero and contributes nothing to the partial sum it is part of. Compressing (e.g. by the zero lossless compression) the data of a weight matrix to encode the sparse weights can provide a big boost in the loaded data from memory, and will help to address a bottleneck of limited memory bandwidth between the memory subsystem and the CPU.

**LSH-Compress Weight Compression using LSH** - As described above, deep learning models typically have significant redundancy, and research indicates that these models can be pruned dramatically during both inference and training without substantively affecting accuracy. Due to this redundancy, lossy compression of weights can be used to reduce the required memory bandwidth further compared to lossless compression. In some embodiments, this lossy compression may be implemented with minimal impact on model accuracy while achieving higher throughput speedup by reducing the required memory bandwidth even further.

**Weight Compression using Regular Hash Tables** - In some embodiments, a random hash function (e.g. CRC (Cyclic Redundancy Check), jhash, etc.) is used to group network connections into hash buckets. Because a random hash function is used, this grouping of weights is largely random. In an operation, all connections grouped to the i^{th} hash bucket will share the same weight value *wᵢ*.

Stated formally, an input vector x ∈ R^{d} is mapped into a feature space with a mapping function *h*: *R^{d}* → *R^{k}* where *k* << d. In case of regular random hashing, the mapping function h is approximately uniform, and can result in large memory savings because the function operates directly on the input *x, O*(*d*) time for compressing, and the hashing signature (k bits) is used as an identification to retrieve back the d bits. The significant dimensionality reduction comes at the cost of collisions, where multiple random inputs can get mapped into the same index. However, this problem is less severe for sparse data sets, and can be counteracted through multiple hashing or larger hash tables.

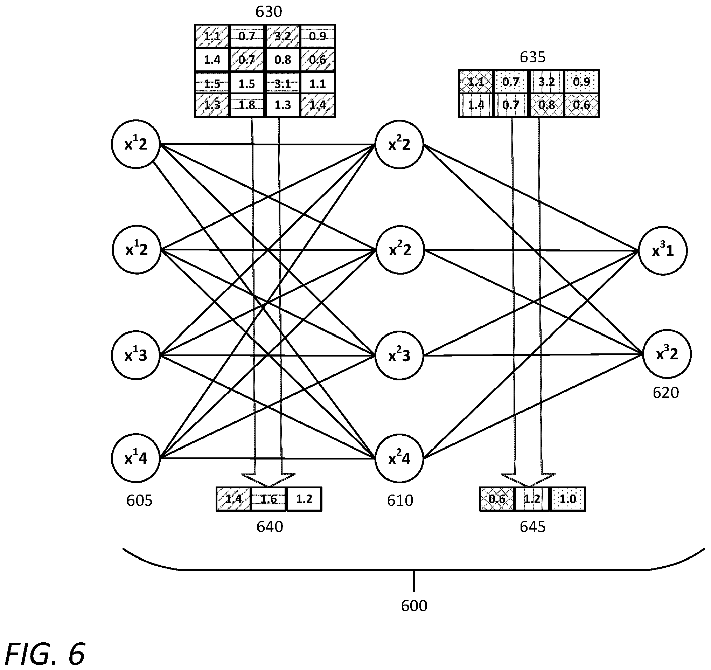

**FIG. 6** is an illustration of application of hashing for weight compression or sharing in a neural network, according to some embodiments. FIG. 6 illustrates a simplified example of a neural network 600, wherein an operations applies random weight compression (sharing) using random hashing. In this illustrated example, the neural network 600 is a simple network with one hidden layer 610 fully connected to the input layer 605 and an output layer 620 with two categories.

For this simple model, certain connections are randomly grouped because these connections hash into a same bucket. Subsequently, all grouped connections share a same weight, the shared weight being an average (or other combination) of all initial weights. As shown in the FIG. 6, for this model with a compression ratio of 0.25, the original 24 weights (illustrated as a first set of weights 630 and a second set of weights 635) are compressed into 6 real weights (illustrated as a first set of average weights 640 and a second set of average weights 645).

**Weight Compression using Locality Sensitive Hash Tables** - Further, in some embodiments two features of sparsity in deep learning models may be utilized: (1) Natural sparsity: As previously noted, for certain layers a weight matrix is very sparse (such as ~85%), and as a result the sparsity pattern (where the weights have values and non-zeros) are very few compared to all possible combinations. (2) Patterns in sparsity: Using the LSH hashing function it is possible to detect different sparsity patterns, with similar patterns being grouped together. This overcomes the potential accuracy loss drawbacks of random links grouping using regular hashing.

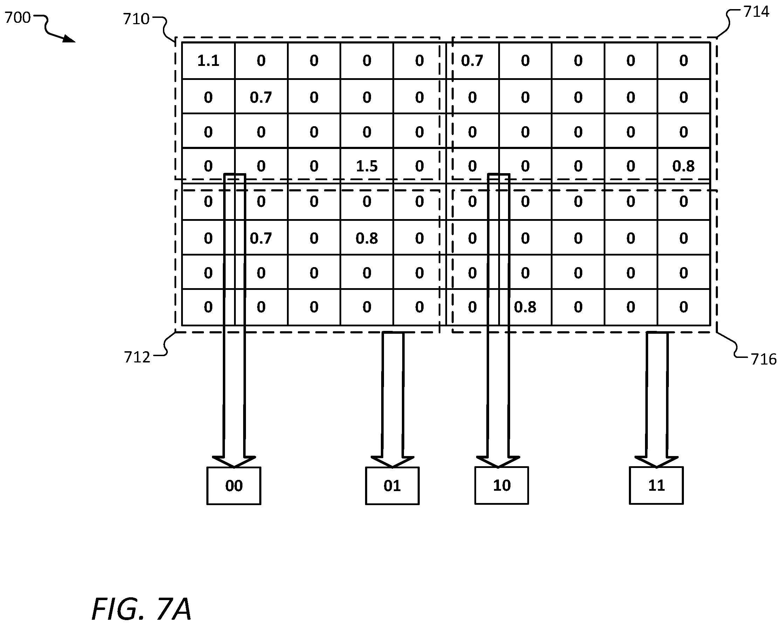

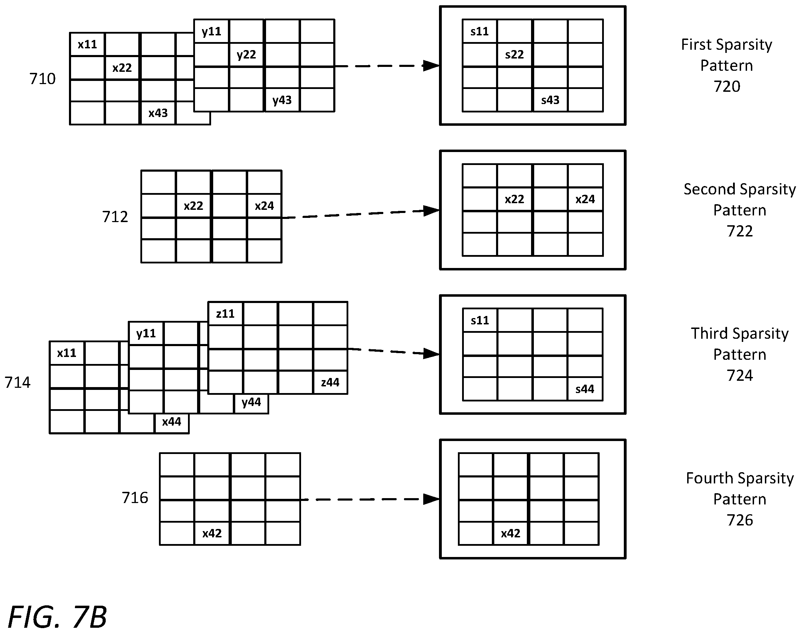

**FIGS. 7A** **and** **7B** illustrate Locality Sensitive Hashing compression, according to some embodiments. FIGS. 7A and 7B illustrate the concept of LSH-compress at a high-level idea of. As shown in FIG. 7A, a sparse matrix 700 includes only a small number of non-zero values. In some embodiments, the sparse weight matrix 700 may be decomposed into smaller tiles. For example, the result of decomposition of matrix 700 results in four tiles, each tile being 4 x 5 in size. Each of the tiles contains a particular sparsity pattern, as shown in tiles 710, 712, 714, and 716. In some embodiments, the patterns then may be utilized in compression operation.

In some embodiments, a certain set of sparsity patterns may be identified. For simplicity, it may be assumed only four sparsity patterns are present in this model, which are shown in FIG. 7B. In some embodiments, as shown in FIG. 7B, an LSH hashing function is to map each of the tile patterns 710-716 into one of the four available sparsity patterns, shown as a first sparsity pattern 720, a second sparsity pattern 722, a third sparsity pattern 724, and a fourth sparsity pattern 726.

In some embodiments, store the sparsity patterns and weights to represent the tiles, thus greatly compressing the sparse matrix in memory. In case there is a hash collision (i.e., a similar sparsity pattern for the same layer but with different weight values has been seen before), the non-zero weights are averaged out across these similar patterns, and the averaged weights may be stored. If no hash-collision occurs, then the weights may then be stored as-is.

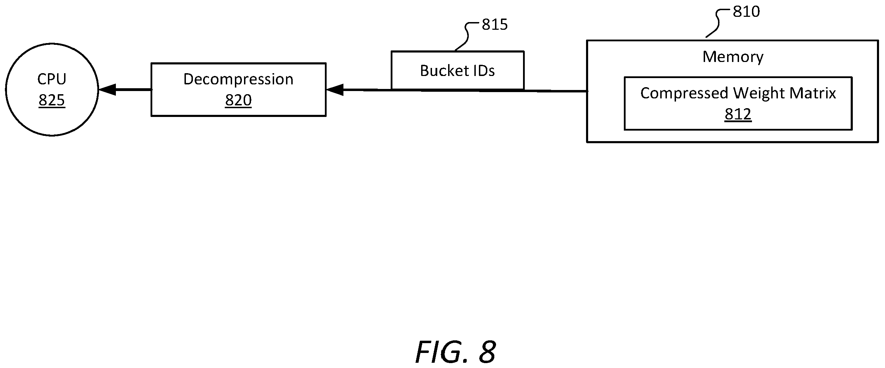

In some embodiments, the stored weights may be utilized with the sparsity patterns to compress the weight matrix data, as further illustrated in FIG. 8.

**FIG. 8** is an illustration of memory loading of compressed weights, according to some embodiments. As shown in FIG. 8, a weight matrix 812 can be stored in the compressed format in memory 810.

In some embodiments, to provide data for the weight matrix in processing, only the bucket IDs 815 need to be loaded from memory 810. In the simple example provided in FIGS. 7A-7B with only four sparsity patterns present, the bucket IDs 815 may be expressed with four ID values, with only two bits needed to represent each ID value. However, any number of bucket IDs may be present. These bucket IDs 815 may then be provided to decompression 820, and directed to the CPU or other processor 825 for processing.

As a result, a significant reduction in memory bandwidth can be provided. In general, the compression ratio depends on the number of distinct patterns compared to the possible values of weights. However, due to the very sparse pattern of weights, the compression ratio is expected to be large. In some embodiments, the compression ratio can be dynamically adjusted and optimized by changing the tile size. Bigger tiles may have too many different patterns, and hence can increase the number of bits in the hash tags, while smaller tiles may be too small to detect any significant similarity patterns, which can also increase the number of bits in the hash tags. In some embodiments, a small number of trials may be applied to attempt to deduce an optimal tile size to provide a maximum compression ratio.

It is noted that LSH hashing overhead is the same as overhead for regular hashing, which is O(d), where d is the dimension of the input (4 x 5 in the above example). The main difference is that regular hashing groups weights randomly, while LSH-compress groups similar-enough sparse patterns together. By applying this smart grouping, weights that are close in values and patterns will be grouped together, and as a result the loss due to averaging out these values is minimal, and much smaller than the random hashing or random weight sharing.

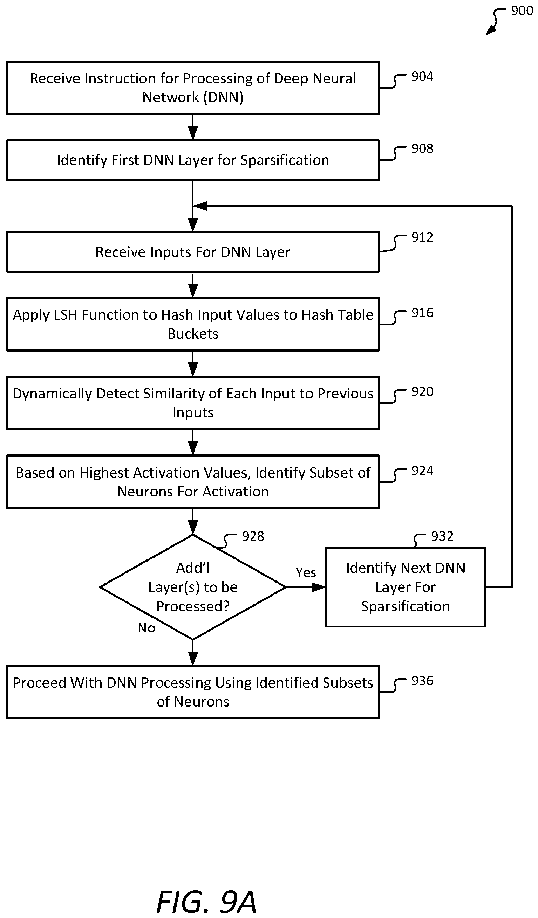

**FIG. 9A** is a flowchart to illustrate dense layer sparsification using Locality Sensitive Hashing, according to some embodiments. In a process 900 for dense layer sparsification, an instruction may be received for processing of a certain deep neural network DNN 904. If there are one or more layers for sparsification, a first DNN layer is selected for sparsification 908.

In some embodiments, inputs are received by the DNN layer 912, and an LSH function is applied to hash input values to hash table buckets 916. An LSH function may include, for example, a random projection function, as illustrated in FIG. 4, or other LSH function. The process continues with dynamically detecting a similarity of each input to previous inputs over time 920, and, based on which neurons have the highest activation values, identify a subset of neurons for activation 924, and thus process sparsification for the DNN layer. In some embodiments, the subset is a certain K percentage of the total number of neurons in the DNN layer.

If there are additional DNN layers to be processed 928, a next DNN layer may be identified for sparsification 932, and the process returns to receiving the inputs for the next DNN layer 912 for the processing of the layer 916-924.

Otherwise, the process can proceed with DNN processing utilizing the identified subsets of neurons 936.

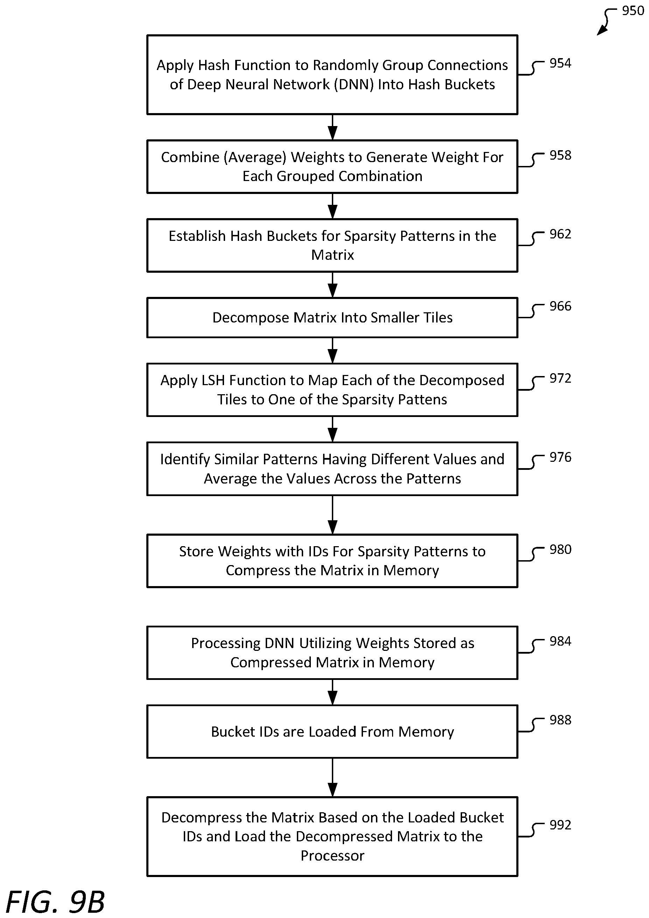

**FIG. 9B** is a flowchart to illustrate compression of weight and activation matrices of models using Locality Sensitive Hashing, according to some embodiments. In some embodiments of a process for compression of weight and activation matrices of models using Locality Sensitive Hashing 950, a hash function is applied to randomly group connections of a DNN into hash buckets 954. For example, weights may be combined (such as by averaging the weights) to generate a group weight for each of the grouped combinations 958.

In some embodiments, hash buckets are established for sparsity patterns in the matrix 962. The matrix may be decomposed into smaller tiles 966, such as illustrated in FIG. 7A, and an LSH function is applied to map each of the decomposed tiles to one of the sparsity patterns 972, such as illustrated in FIG. 7B. In some embodiments, there are similar patterns identified that have different values, the values may be averaged across the patterns 976.

The weights then may be stored with identifications for the sparsity patterns, such as a particular set of bits representing a bucket ID for each pattern, in order to compress the matrix in memory 980, such as the compressed matrix 812 stored in memory 810 in FIG. 8.

In some embodiments, the process may further include processing the DNN by a processing, the processing utilizing the weights stored as the compressed matrix in memory 884. In some embodiments, the bucket IDs are loaded from memory 988, thus allowing for decompressing of the matrix based on the loaded bucket IDs, and loading the decompressed matrix to the processor 992.

**FIG. 10** is a schematic diagram of an illustrative electronic computing device to enable dense layer sparsification and compression according to some embodiments. In some embodiments, the computing device 1000 includes one or more processors 1010 including one or more processors cores 1018. In some embodiments, the computing device is to provide for dense layer sparsification and compression using Locality Sensitive Hashing, as provided in FIGS. 1-9B.

The example computing device 1000 may be implemented as a component of another system such as, for example, a mobile device, a wearable device, a laptop computer, a tablet, a desktop computer, a server, etc. In one embodiment, computing device 1000 includes or can be integrated within (without limitation): a server-based gaming platform; a game console, including a game and media console; a mobile gaming console, a handheld game console, or an online game console. In some embodiments the computing device 1000 is part of a mobile phone, smart phone, tablet computing device or mobile Internet-connected device such as a laptop with low internal storage capacity. In some embodiments the computing device 1000 is part of an Internet-of-Things (IoT) device, which are typically resource-constrained devices. IoT devices may include embedded systems, wireless sensor networks, control systems, automation (including home and building automation), and other devices and appliances (such as lighting fixtures, thermostats, home security systems and cameras, and other home appliances) that support one or more common ecosystems, and can be controlled via devices associated with that ecosystem, such as smartphones and smart speakers.

Computing device 1000 can also include, couple with, or be integrated within: a wearable device, such as a smart watch wearable device; smart eyewear or clothing enhanced with augmented reality (AR) or virtual reality (VR) features to provide visual, audio or tactile outputs to supplement real world visual, audio or tactile experiences or otherwise provide text, audio, graphics, video, holographic images or video, or tactile feedback; other augmented reality (AR) device; or other virtual reality (VR) device. In some embodiments, the computing device 1000 includes or is part of a television or set top box device. In one embodiment, computing device 1000 can include, couple with, or be integrated within a self-driving vehicle such as a bus, tractor trailer, car, motor or electric power cycle, plane or glider (or any combination thereof). The self-driving vehicle may use computing system 1000 to process the environment sensed around the vehicle.

The computing device 1000 may additionally include one or more of the following: cache 1020, a graphical processing unit (GPU) 1012 (which may operate as a hardware accelerator in some implementations), one or more wireless input/output (I/O) interfaces 1025, one or more wired I/O interfaces 1030, memory circuitry 1040, power management circuitry 1050, one or more non-transitory data storage devices 1060, and a network interface 1070 for connection to a network 1072. The following discussion provides a brief, general description of the components forming the illustrative computing device 1000. Example, non-limiting computing devices 1000 may include a desktop computing device, blade server device, workstation, or similar device or system.

In embodiments, the processor cores 1018 are capable of executing machine-readable instruction sets 1014, reading data and/or instruction sets 1014 from the one or more data storage devices 1060 and writing data to the one or more data storage devices 1060. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like.

The processor cores 1018 may include any number of hardwired or configurable circuits, some or all of which may include programmable and/or configurable combinations of electronic components, semiconductor devices, and/or logic elements that are disposed partially or wholly in a PC, server, or other computing system capable of executing processor-readable instructions.

The computing device 1000 includes a bus or similar communications link 1016 that communicably couples and facilitates the exchange of information and/or data between various system components including the processor cores 1018, the cache 1020, the graphics processor circuitry 1012, one or more wireless I/O interfaces 1025, one or more wired I/O interfaces 1030, one or more data storage devices 1060, and/or one or more network interfaces 1070. The computing device 1000 may be referred to in the singular herein, but this is not intended to limit the embodiments to a single computing device 1000, since in certain embodiments, there may be more than one computing device 1000 that incorporates, includes, or contains any number of communicably coupled, collocated, or remote networked circuits or devices.

The processor cores 1018 may include any number, type, or combination of currently available or future developed devices capable of executing machine-readable instruction sets.

The processor cores 1018 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in FIG. 10 are of conventional design. Consequently, such blocks need not be described in further detail herein, as they will be understood by those skilled in the relevant art. The bus 1016 that interconnects at least some of the components of the computing device 1000 may employ any currently available or future developed serial or parallel bus structures or architectures.

The system memory 1040 may include read-only memory ("ROM") 1042 and random access memory ("RAM") 1046. A portion of the ROM 1042 may be used to store or otherwise retain a basic input/output system ("BIOS") 1044. The BIOS 1044 provides basic functionality to the computing device 1000, for example by causing the processor cores 1018 to load and/or execute one or more machine-readable instruction sets 1014. In some embodiments, one or more machine-readable instruction sets 1014 include instructions for DNN processing, including dense layer sparsification and compression. In embodiments, at least some of the one or more machine-readable instruction sets 1014 cause at least a portion of the processor cores 1018 to provide, create, produce, transition, and/or function as a dedicated, specific, and particular machine, for example a word processing machine, a digital image acquisition machine, a media playing machine, a gaming system, a communications device, a smartphone, or similar.

The wireless I/O interface 1025 and/or the wired I/O interface 1030 may be communicably coupled to one or more physical output devices (tactile devices, video displays, audio output devices, hardcopy output devices, etc.). The wireless I/O interface 1025 and/or the wired I/O interface 1030 may communicably couple to one or more physical input devices (pointing devices, touchscreens, keyboards, tactile devices, etc.). The at least one wireless I/O interface 1025 may include any currently available or future developed wireless I/O interface. Examples of wireless I/O interfaces include, but are not limited to: BLUETOOTH^{®}, near field communication (NFC), and similar. The wired I/O interface 1030 may include any currently available or future developed I/O interface. Example wired I/O interfaces include, but are not limited to, universal serial bus (USB), IEEE 1394 ("FireWire"), and similar.

The data storage devices 1060 may include one or more hard disk drives (HDDs) and/or one or more solid-state storage devices (SSDs). The one or more data storage devices 1060 may include any current or future developed storage appliances, network storage devices, and/or systems. Non-limiting examples of such data storage devices 1060 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more data storage devices 1060 may include one or more removable storage devices, such as one or more flash drives, flash memories, flash storage units, or similar appliances or devices capable of communicable coupling to and decoupling from the computing device 1000.

The one or more data storage devices 1060 may include interfaces or controllers (not shown) communicatively coupling the respective storage device or system to the bus 1016. The one or more data storage devices 1060 may store, retain, or otherwise contain machine-readable instruction sets, data structures, program modules, data stores, databases, logical structures, and/or other data useful to the processor cores 1018 and/or graphics processor circuitry 1012 and/or one or more applications executed on or by the processor cores 1018 and/or graphics processor circuitry 1012. In some instances, one or more data storage devices 1060 may be communicably coupled to the processor cores 1018, for example via the bus 1016 or via the one or more wired communications interfaces 1030 (e.g., Universal Serial Bus or USB); the one or more wireless communications interfaces 1025 (e.g., Bluetooth^{®}, Near Field Communication or NFC); and/or the one or more network interfaces 1070 (IEEE 802.3 or Ethernet, IEEE 802.11, or Wi-Fi^{®}, etc.).

Processor-readable instruction sets 1014 and other programs, applications, logic sets, and/or modules may be stored in whole or in part in the system memory 1040. Such instruction sets 1014 may be transferred, in whole or in part, from the one or more data storage devices 1060. The instruction sets 1014 may be loaded, stored, or otherwise retained in system memory 1040, in whole or in part, during execution by the processor cores 1018 and/or graphics processor circuitry 1012.

The computing device 1000 may include the power management circuitry 1050 to control one or more operational aspects of the energy storage device 1052. In embodiments, the energy storage device 1052 may include one or more primary (i.e., non-rechargeable) or secondary (i.e., rechargeable) batteries or similar energy storage devices. In embodiments, the energy storage device 1052 may include one or more supercapacitors or ultracapacitors. In embodiments, the power management circuitry 1050 may alter, adjust, or control the flow of energy from an external power source 1054 to the energy storage device 1052 and/or to the computing device 1000. The power source 1054 may include, but is not limited to, a solar power system, a commercial electric grid, a portable generator, an external energy storage device, or any combination thereof.

For convenience, the processor cores 1018, the graphics processor circuitry 1012, the wireless I/O interface 1025, the wired I/O interface 1030, the data storage device 1060, and the network interface 1070 are illustrated as communicatively coupled to each other via the bus 1016, thereby providing connectivity between the above-described components. In alternative embodiments, the above-described components may be communicatively coupled in a different manner than illustrated in FIG. 10. For example, one or more of the above-described components may be directly coupled to other components, or may be coupled to each other, via one or more intermediary components (not shown). In another example, one or more of the above-described components may be integrated into the processor cores 1018 and/or the graphics processor circuitry 1012. In some embodiments, all or a portion of the bus 1016 may be omitted and the components are coupled directly to each other using suitable wired or wireless connections.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may utilize one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but utilize addition of a library (e.g., a dynamic link library (DLL)), a software development kit (SDK), an application programming interface (API), etc. in order to execute the instructions on a particular computing device or other device. In another example, the machine readable instructions may be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 9A and 9B and other figures may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended.

The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority, physical order, or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

The following examples pertain to further embodiments.

In Example 1, an apparatus includes one or more processors; and a memory to store data for processing, including data for processing of a deep neural network (DNN) including one or more layers, each layer including a plurality of neurons; and the one or more processors to perform one or both of the following: sparsification of one or more layers of the DNN, including selecting a subset of the plurality of neurons of a first layer of the DNN for activation based at least in part on locality sensitive hashing of inputs to the first layer; or compression of a weight or activation matrix of one or more layers of the DNN, including detection of sparsity patterns in a weight or activation matrix of the first layer of the DNN based at least in part on locality sensitive hashing of patterns in the matrix.

In Example 2, sparsification of one or more layers of the DNN includes utilizing locality sensitive hashing to map inputs to the first layer to a plurality of hash table buckets; and detecting similarity of each input to previous inputs to the first layer.

In Example 3, sparsification of one or more layers of the DNN further includes identifying the subset of neurons based at least in part on the which neurons of the first layer have highest activation values.

In Example 4, utilizing locality sensitive hashing includes applying one or more locality sensitive hash functions and mapping to one or more hash tables for the first layer.

In Example 5, sparsification of one or more layers of the DNN further includes activating the selected subset of neurons of the first layer and deactivating all other neurons of the first layer.

In Example xx, the selected subset of neurons includes a certain percentage of a total number of neurons of the first layer.

In Example 7, compression of the matrix of the first layer includes grouping connections of the first layer of the DNN into hash buckets; and combining values of the grouped connections of each hash bucket to generate a group value for the grouped connections.

In Example 8, compression of the weight or activation matrix of the first layer further includes establishing a hash bucket for each of a plurality of sparsity patterns for the matrix; decomposing the matrix into a plurality of tiles; and applying a locality sensitive hashing function to map each of the plurality of tiles to the hash buckets based on sparsity patterns found in the tiles.

In Example 9, compression of the weight or activation matrix of the first layer further includes compressing the matrix including storing an identification for each of the sparsity patterns mapped by the plurality of tiles.

In Example 10, one or more non-transitory computer-readable storage mediums having stored thereon instructions that, when executed by one or more processors, cause the one or more processors to perform operations comprising receiving data for a deep neural network (DNN), the DNN including one or more layers, each layer including a plurality of neurons; and processing the DNN, including performing one or both of the following: sparsification of one or more layers of the DNN, including selecting a subset of the plurality of neurons of a first layer of the DNN for activation based at least in part on locality sensitive hashing of inputs to the first layer; or compression of a weight or activation matrix for one or more layers of the DNN, including detection of sparsity patterns in a weight or activation matrix of the first layer of the DNN based at least in part on locality sensitive hashing of patterns in the matrix.

In Example 11, sparsification of one or more layers of the DNN includes utilizing locality sensitive hashing to map inputs to the first layer to a plurality of hash table buckets; and detecting similarity of each input to previous inputs to the first layer.

In Example 12, sparsification of one or more layers of the DNN further includes identifying the subset of neurons based at least in part on the which neurons of the first layer have highest activation values.

In Example 13, sparsification of one or more layers of the DNN further includes activating the selected subset of neurons of the first layer and deactivating all other neurons of the first layer.

In Example 14, compression of the matrix includes grouping connections of the first layer of the DNN into hash buckets; and combining the values of the grouped connections of each hash bucket to generate a group value for the grouped connections.

In Example 15, compression of the weight or activation matrix of the first layer further includes establishing a hash bucket for each of a plurality of sparsity patterns for the weight matrix; decomposing the weight matrix into a plurality of tiles; and applying a locality sensitive hashing function to map each of the plurality of tiles to the hash buckets based on sparsity patterns found in the tiles.

In Example 16, computing system includes one or more processors; and a memory to store data for processing, including data for processing of a deep neural network (DNN) including one or more layers, each layer including a plurality of neurons; and wherein the computing system is operable to perform neural network layer sparsification, including the computing system to utilize locality sensitive hashing to map inputs to a first layer of the DNN to a plurality of hash table buckets; select a subset of the plurality of neurons of the first layer of the DNN based at least in part on the locality sensitive hashing of the inputs to the first layer; and activate the selected subset of neurons of the first layer and deactivate all other neurons of the first layer.

In Example 17, utilizing locality sensitive hashing includes applying one or more locality sensitive hash functions and mapping to one or more hash tables for the first layer.

In Example 18, the computing system is further operable to perform compression of weight or activation matrices of one or more layers of the DNN, including the computing system to detect sparsity patterns in a weight or activation matrix of a first layer of the DNN based at least in part on locality sensitive hashing of patterns in the matrix; and compress the matrix of the first layer based on the detected sparsity patterns.

In Example 19, compression of the matrix of the first layer includes grouping connections of the first layer of the DNN into hash buckets; and combining values of the grouped connections of each hash bucket to generate a group value for the grouped connections.

In Example 20, compression of the weight or activation matrix of the first layer further includes establishing a hash bucket for each of a plurality of sparsity patterns for the matrix; decomposing the matrix into a plurality of tiles; and applying a locality sensitive hashing function to map each of the plurality of tiles to the hash buckets based on sparsity patterns found in the tiles.

In Example 21, an apparatus includes means for receiving data for a deep neural network (DNN), the DNN including one or more layers, each layer including a plurality of neurons; and means for processing the DNN, including one or both of the following: means for sparsification of one or more layers of the DNN, including selecting a subset of the plurality of neurons of a first layer of the DNN for activation based at least in part on locality sensitive hashing of inputs to the first layer; or means for compression of a weight or activation matrix for one or more layers of the DNN, including detection of sparsity patterns in a weight or activation matrix of the first layer of the DNN based at least in part on locality sensitive hashing of patterns in the matrix.

In Example 22, the means for sparsification of one or more layers of the DNN includes means for utilizing locality sensitive hashing to map inputs to the first layer to a plurality of hash table buckets; and means for detecting similarity of each input to previous inputs to the first layer.

In Example 23, the means for sparsification of one or more layers of the DNN further includes means for identifying the subset of neurons based at least in part on the which neurons of the first layer have highest activation values.

In Example 24, the means for sparsification of one or more layers of the DNN further includes means for activating the selected subset of neurons of the first layer and deactivating all other neurons of the first layer.

In Example 25, the means for compression of the matrix includes means for grouping connections of the first layer of the DNN into hash buckets; and means for combining the values of the grouped connections of each hash bucket to generate a group value for the grouped connections.

In Example 26, the means for compression of the weight or activation matrix of the first layer further includes means for establishing a hash bucket for each of a plurality of sparsity patterns for the weight matrix; means for decomposing the weight matrix into a plurality of tiles; and means for applying a locality sensitive hashing function to map each of the plurality of tiles to the hash buckets based on sparsity patterns found in the tiles.

Specifics in the Examples may be used anywhere in one or more embodiments.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

## Claims

1. An apparatus comprising:
one or more processors;
a memory to store data for processing, including data for processing of a deep neural network (DNN) including one or more layers, each layer including a plurality of neurons; and
the one or more processors to perform one or both of the following:
sparsification of one or more layers of the DNN, including selecting a subset of the plurality of neurons of a first layer of the DNN for activation based at least in part on locality sensitive hashing of inputs to the first layer; or
compression of a weight or activation matrix of one or more layers of the DNN, including detection of sparsity patterns in a weight or activation matrix of the first layer of the DNN based at least in part on locality sensitive hashing of patterns in the matrix.

2. The apparatus of claim 1, wherein sparsification of one or more layers of the DNN includes:
utilizing locality sensitive hashing to map inputs to the first layer to a plurality of hash table buckets; and
detecting similarity of each input to previous inputs to the first layer.

3. The apparatus of claim 2, wherein sparsification of one or more layers of the DNN further includes:
identifying the subset of neurons based at least in part on the which neurons of the first layer have highest activation values.

4. The apparatus of claim 2, wherein utilizing locality sensitive hashing includes applying one or more locality sensitive hash functions and mapping to one or more hash tables for the first layer.

5. The apparatus of claim 1, wherein sparsification of one or more layers of the DNN further includes activating the selected subset of neurons of the first layer and deactivating all other neurons of the first layer.

6. The apparatus of claim 1, wherein the selected subset of neurons includes a certain percentage of a total number of neurons of the first layer.

7. The apparatus of claim 1, wherein compression of the matrix of the first layer includes:
grouping connections of the first layer of the DNN into hash buckets; and
combining values of the grouped connections of each hash bucket to generate a group value for the grouped connections.

8. The apparatus of claim 7, wherein compression of the weight or activation matrix of the first layer further includes:
establishing a hash bucket for each of a plurality of sparsity patterns for the matrix;
decomposing the matrix into a plurality of tiles; and
applying a locality sensitive hashing function to map each of the plurality of tiles to the hash buckets based on sparsity patterns found in the tiles.

9. The apparatus of claim 8, wherein compression of the weight or activation matrix of the first layer further includes:
compressing the matrix including storing an identification for each of the sparsity patterns mapped by the plurality of tiles.

10. One or more non-transitory computer-readable storage mediums having stored thereon instructions that, when executed by one or more processors, cause the one or more processors to perform operations comprising:
receiving data for a deep neural network (DNN), the DNN including one or more layers, each layer including a plurality of neurons; and
processing the DNN, including performing one or both of the following:
sparsification of one or more layers of the DNN, including selecting a subset of the plurality of neurons of a first layer of the DNN for activation based at least in part on locality sensitive hashing of inputs to the first layer; or
compression of a weight or activation matrix for one or more layers of the DNN, including detection of sparsity patterns in a weight or activation matrix of the first layer of the DNN based at least in part on locality sensitive hashing of patterns in the matrix.

11. The medium of claim 10, wherein sparsification of one or more layers of the DNN includes:
utilizing locality sensitive hashing to map inputs to the first layer to a plurality of hash table buckets; and
detecting similarity of each input to previous inputs to the first layer.

12. The medium of claim 11, wherein sparsification of one or more layers of the DNN further includes:
identifying the subset of neurons based at least in part on the which neurons of the first layer have highest activation values.

13. The medium of claim 11, wherein sparsification of one or more layers of the DNN further includes activating the selected subset of neurons of the first layer and deactivating all other neurons of the first layer.

14. The medium of claim 10, wherein compression of the matrix includes:
grouping connections of the first layer of the DNN into hash buckets; and
combining the values of the grouped connections of each hash bucket to generate a group value for the grouped connections.

15. The medium of claim 14, wherein compression of the weight or activation matrix of the first layer further includes:
establishing a hash bucket for each of a plurality of sparsity patterns for the weight matrix;
decomposing the weight matrix into a plurality of tiles; and
applying a locality sensitive hashing function to map each of the plurality of tiles to the hash buckets based on sparsity patterns found in the tiles.
